# EUROPÄISCHE PATENTANMELDUNG

(11) **EP 1 130 006 A1**
(43) Veröffentlichungstag der Anmeldung: **05.09.2001**
(21) Anmeldenummer: 01101609.4
(22) Anmeldetag: 25.01.2001
(51) Int. Cl.: C04B 41/86, H05B 3/26

(54) **Beschichteter Formkörper aus Siliciumnitrid**

(30) Priorität: 24.02.2000 DE 10008646
(71) Anmelder: Wacker-Chemie GmbH, 81737 München (DE)
(72) Erfinder: Sigl, Lorenz, Dr., 6600 Lechaschau (AT); Lange, Dietrich, Dr., 87437 Kempten (DE); Fössel, Rudolf, 87452 Altusried (DE); Weiss, Rainer, 87439 Kempten (DE)
(74) Vertreter: Potten, Holger

(57) **Zusammenfassung**

Formkörper auf Basis von Siliciumnitrid, der dadurch gekennzeichnet ist, daß sich auf dem Siliciumnitrid eine haft- und kratzfeste Beschichtung umfassend ein Material ausgewählt aus der Gruppe Glas, Glaskeramik und deren Mischungen befindet.

## Beschreibung

Die Erfindung betrifft beschichtete Formkörper aus Siliciumnitrid und Verfahren zu ihrer Herstellung.

Elektrisch beheizte Formkörper zum Kochen und Erwärmen von Speisen sind seit langem in Gebrauch. Diese Formkörper bestehen in der Regel entweder aus Grauguß oder einem glaskeramischen Material. Die Beheizung von Graugußplatten erfolgt durch Erhitzen eines elektrischen Widerstandskörpers, der die Wärme durch Leitung an den Plattenkörper überträgt und von diesem durch ein Material mit hoher elektrischer Durchschlagfestigkeit isoliert ist. Bei Heizflächen aus glaskeramischen Körpern erfolgt die Erwärmung in der Regel durch Strahlungsheizkörper, elektromagnetische Induktionsheizkörper oder durch Halogenheizkörper. Es ist ferner bekannt, die Oberfläche glaskeramischer Kochplatten durch Applizieren eines glasartigen Dekors grafisch mit dekorativen bzw. funktionalen Mustern mit Hilfe bekannter Verfahren der Glastechnologie zu gestalten.

Neben diesen Kochsystemen wurden in den letzten Jahren Heizsysteme entwickelt, bei denen die elektrisch beheizten Platte aus dichtgesintertem Siliciumnitrid besteht. Die Siliciumnitrid-Platte bildet die Kontaktfläche zum Aufstellen von Kochgeschirr. Sie ist thermisch sehr gut leitfähig und trennt den Heizleiter elektrisch von der Umgebung. Folgende Anmeldungen beschreiben solche Heizsysteme:
DE 37 28 466 A1 (E.G.O., Anmeldetag 26.8.87) beschreibt ein Kochgerät, bei dem die Heizplatte aus Siliciumnitrid bestehen kann.
EP 0 783 830 B1 (Maravic, Priorität 20.09.94) beschreibt ein elektrisches Heizelement, dessen elektrisch isolierende Baukomponente in einer Ausführungsform aus Siliciumnitrid besteht.
DE 296 17 732 U1 (AKO, Anmeldetag 12.10.96) offenbart Kochplatten aus Siliciumnitrid oder Siliciumcarbid.
DE 197 01 640 A1 (E.G.O., Anmeldetag 18.01.97) offenbart ein Kochsystem mit Platten aus nichtoxidischer Keramik, insbesondere Siliciumnitrid.

Siliciumnitrid besitzt in der Regel eine graue Eigenfarbe, die eine Palette beginnend bei sehr hellen, elfenbeinfarbenen Tönen über mittelgraue bis zu sehr dunklen, nahezu schwarzen Grautönen umfaßt. Ein der Akzeptanz von dichtgesintertem Siliciumnitrid als Heizplatte beim Verbraucher entgegenstehendes Problem ist die optische Inhomogenität dieses Materials, die sich auf hartbearbeiteten Oberflächen durch diverse fleckenartige und damit unerwünschte Muster manifestiert. Unter optischen Inhomogenitäten sind dabei nicht gewollte und durch den Produktionsprozeß kaum steuerbare Ungleichmäßigkeiten der Oberflächenfarbe der Platte zu verstehen.

Die Ursachen für die optischen Inhomogenitäten in Siliciumnitrid sind bis heute nur unvollkommen bekannt. Sicher scheint zu sein, daß metallische (z.B. Fe, W, Co, Ni, Si) und nichtmetallische (z.B. C) Spurenelemente und deren Verbindungen im Sinterpulver sowie die Ofenatmosphäre beim Sintern erheblichen Einfluß auf die Farbe des dichtgesinterten Siliciumnitrids und dessen optische Homgenität hat. Es versteht sich von selbst, daß im Volumen des Materials vorhandene Inhomogenitäten nicht durch Bearbeitung der Oberfläche entfernt werden können.

Mit üblichen Produktionsverfahren läßt sich die Eigenfarbe von dichtgesintertem Siliciumnitrid zwischen hellgrau und schwarz nur grob beeinflussen, wobei die o.g. Einschränkungen gelten. Derzeit ist es daher schwierig, über einen längeren Zeitraum unter Verwendung verschiedener Rohstoff- und Aufbereitungschargen ein optisch gleich aussehendes Produkt herzustellen.

DE 197 54 235 A1 (FCT, Anmeldetag 06.12.97) schlägt zur Lösung des Problems der optischen Inhomogenitäten vor, dem Siliciumnitrid durch Zusätze ein granitähnliches Aussehen zu verleihen. Diese Zusätze bestehen im wesentlichen auch aus Siliciumnitrid, dessen oxidische Additive bezüglich ihrer Zusammensetzung bzw. ihres Mengenanteils verändert wurden. Durch die gemeinsame Verdichtung von Siliciumnitridpartikeln unterschiedlicher Zusammensetzung entsteht ein melierter (optisch grob inhomogener) Werkstoff, der unerwünschte, fein strukturierte optische Inhomogenitäten kaschiert. Ein wesentlicher Nachteil dieser Methode ist, daß nur die sehr eingeschränkte Farbpalette der für Siliciumnitrid bekannten Farben zur Gestaltung der Oberfläche verwendet werden kann. So sind beispielsweise keine kräftigen oder leuchtenden farbigen Oberflächen erzielbar.

DE 197 05 838 A1 (Fraunhofer Inst. IKTS, 15.02.97) offenbart einen farbigen Siliciumnitridwerkstoff und das Verfahren zu seiner Herstellung. Durch Zusätze, die aus Metalloxiden, Übergangsmetallsalzen oder aus Siliciumcarbid bestehen können, wird die Farbe des Siliciumnitrids beeinflußt. In vor allem dunkler gefärbtem Siliciumnitrid, insbesondere schwarzem Siliciumnitrid, lassen sich dadurch zwar einige Arten von optischen Inhomogenitäten unterdrücken, aber nicht solche, die durch die Ofenatmosphäre oder durch Kristallisationseffekte des Siliciumnitrids hervorgerufen werden. Somit läßt sich auch mit den in DE 197 05 838 beschriebenen Methoden kein Siliciumnitrid herstellen, das den Anforderungen nach ausreichender und langfristiger optischer Homogenität entspricht.

Alle Verfahren, die auf Einfärben oder teilweisem Einfärben der Rohstoffe basieren, haben den Nachteil, daß sie aufwendig sind. So muß jeweils ein neue Pulvercharge hergestellt werden, wenn die Farbe der Platten geändert werden soll. Eine Pulvercharge umfaßt üblicherweise zwischen 200 und 2000 kg.

Ein weiteres Problem für die Verwendung von Siliciumnitrid als Kochplatte ist die Empfindlichkeit von Siliciumnitrid-Oberflächen gegenüber verwendungsbedingten Verschmutzungen. Verwendungsbedingten Verschmutzungen sind solche wie sie beim bestimmungsgemäßen Gebrauch der Kochplatten anfallen. Es handelt sich im wesentlichen um Partikel von Lebensmitteln sowie wässrige Lösungen, die Lebensmittel oder deren Bestandteile enthalten. Während die Verschmutzung bei kalter Kochplatte zu keinerlei Problemen führt und sich diese leicht mit haushaltsüblichen Methoden entfernen lassen, kommt es bei heißer Kochplatte zu unerwünschten Reaktionen zwischen der Kochplattenoberfläche und der Verschmutzung. Diese Reaktionen können dazu führen, daß auch nach gründlicher Reinigung optische Inhomogenitäten in Form von Flecken auf der Oberfläche der Kochplatte zurückbleiben.

In der EP 0 729 442 B1 (INM, Anmeldetag 18.10.1994) wird ein Verfahren zur Herstellung von glasartigen Überzügen auf Substraten aus Metall, Glas oder Keramik durch Hydrolyse und Polykondensation siliciumhaltiger Verbindungen auf dem Substrat beschrieben.

In DE 19712918 C1 (FhG, Anmeldetag 27.3.1997) wird ein Verfahren zur Ausbildung einer überwiegend silikatischen Glasur auf einen Silicium enthaltenden nichtoxidischen Keramikwerkstoff beschrieben. Dieses Verfahren läßt sich jedoch nur mit Komponenten durchführen, deren thermischer Ausdehnungskoeffizient an den Grundwerkstoff angepaßt wurde. Nachteiligerweise erfordert die Vorbereitung der Komponenten damit eine aufwändige Materialanpassung.

Aus GB 2287933 (T&N Technology Limited, Anmeldetag 22.03.1994) ist ein Verfahren zur Herstellung eines glasartigen Überzugs auf einem keramischen Material beschrieben, wobei als keramisches Material auch reaktionsgesintertes Siliciumnitrid genannt ist. Da reaktionsgesintertes Siliciumnitrid aufgrund seiner Poren eine rauhe Oberfläche besitzt, haften die so hergestellten glasartigen Überzüge zwar auf einem derartigen Siliciumnitrid, allerdings ist dies Verfahren ungeeignet um auf porenfreiem Siliciumnitrid, wie z.B. heißgepresstem Siliciumnitrid (HPSN), gasdruckgesintertem Siliciumnitrid (SSN), reaktionsgebundenem und nachgesintertem Siliciumnitrid (SRBSN) oder heißisostatisch gepresstem Siliciumnitrid (HIPSN), einen Überzug mit ausreichender Haftung zu erzeugen.

Gleiches gilt für die in EP A 393 332 (T&N Technology Limited, Anmeldetag 27.02.1990) offenbarten Formkörper aus reaktionsgesintertem Siliciumnitrid.

Ausgehend vom dargestellten Stand der Technik liegt der Erfindung die Aufgabe zugrunde, einen Formkörper auf Basis von Siliciumnitrid zur Verfügung zu stellen, bei dem die o. g. Nachteile und Mängel nicht mehr auftreten.

Die Aufgabe wird gelöst durch einen Formkörper, der dadurch gekennzeichnet ist, daß das Siliciumnitrid ausgewählt ist aus der Gruppe heißgepresstes Siliciumnitrid (HPSN), gasdruckgesintertes Siliciumnitrid (SSN), reaktionsgebundenes und nachgesintertes Siliciumnitrid (SRBSN) und heißisostatisch gepresstes Siliciumnitrid (HIPSN), wobei sich auf dem Siliciumnitrid eine haft- und kratzfeste oberflächliche Beschichtung umfassend ein Material ausgewählt aus der Gruppe Glas, Glaskeramik und deren Mischungen befindet.

Als Beschichtung werden vorzugsweise handelsübliche Produkte, wie sie in der keramischen Industrie zum Glasieren und Dekorieren von Porzellan und ähnlichen keramischen Materialien üblich sind, verwendet.

Solche keramische Dekorschichten sind seit langem bekannt, siehe z. B. Stefan Stefanov und Svetlan Batschwarow: "Keramik-Glasuren", Bauverlag GmbH, Wiesbaden und Berlin, ISBN 3-7625-2600-1, 1988 oder Taylor, J.R., Bull, A.C., "Ceramic Glaze Technology", Pergamon Press, Oxford, 1986, ISBN 0-08-033465-2.

Vorzugsweise umfaßt das Beschichtungsmaterial in der Glasurtechnik übliche Glasurschmelzen, z. B. Oxide, wie beispielsweise Oxide der Elemente Lithium, Natrium, Magnesium, Aluminium, Silicium, Bor, Kalium, Kalzium, Titan, Vanadium, Chrom, Mangan, Eisen Kobalt, Nickel, Kupfer, Zink, Strontium, Yttrium, Zirkon, Niob, Molybdän, Lanthan und Lanthaniden, Hafnium, Tantal, Wolfram oder Mischungen dieser Oxide.

Wenn das Beschichtungsmaterial gefärbt sein soll, umfaßt es farbgebende Substanzen. Als farbgebende Substanzen werden vorzugsweise Farbpigmente aus Oxiden oder Mischoxiden der Elemente Eisen, Kobalt, Kupfer, Mangan, Chrom, Nickel, Zinn, Zirkon, Vanadium, Antimon, Titan, Cadmium, Selen, Praseodym, Neodym, Wismut, Molybdän, Gold, Palladium, Silber, Platin, Iridium oder kolloidal verteilte Metallpartikel der Elemente Titan, Zirkon, Hafnium, Vanadium, Niob, Tantal, Chrom, Molybdän, Wolfram, Mangan, Rhenium, Eisen, Ruthenium, Osmium, Kobalt, Rhodium, Iridium, Nickel, Palladium, Platin, Kupfer, Silber, Gold, Zink, Kadmium, Blei verwendet.

Eine Färbung des Beschichtungsmaterials kann ebenso durch Ionenfärbung, wie beispielsweise aus Weyl, W.A. Coloured Glasses, Society of Glass Technology, Sheffield, England, 1967, 2^{nd}. Edition, bekannt, erreicht werden.

Zwischen den Glasurschmelzen und den farbgebenden Bestandteilen besteht eine gewisse Löslichkeit. Daher sind manche Substanzen sowohl "glasurbildend" als auch "farbgebend".

Besonders bevorzugt besteht die Beschichtung aus den genannten Oxiden sowie den gegebenenfalls darin enthaltenen farbgebenden Substanzen.

Vorzugsweise hat die Beschichtung eine Dicke von weniger als 50 *µ*m, besonders bevorzugt zwischen 0,5 und 20 *µ* m, und insbesondere bevorzugt zwischen 1 und 10 *µ*m.

Bei Schichtdicken im besonders bevorzugten Bereich ist der Wärmeausdehnungskoeffizient der Beschichtung unmaßgeblich, während bei größeren Schichtdicken vorzugsweise Beschichtungsmaterialien mit einem dem Siliciumnitrid angepassten Wärmeausdehnungskoeffizienten (0,5 x 10⁻⁶ bis 5 x 10⁻⁶ K⁻¹) verwendet werden.

Die Oberflächenrauhigkeit Rₐ der Beschichtung auf dem erfindungsgemäßen Formkörper beträgt vorzugsweise < 5 *µ*m, besonders bevorzugt < 1 *µ*m.

Unter kratzfester Beschichtung ist im Sinne der vorliegenden Erfindung zu verstehen, daß die Beschichtung eine Härte HV0,05 von größer 800 aufweist.

Unter haftfester Beschichtung ist im Sinne der vorliegenden Erfindung zu verstehen, daß die Beschichtung selbst bei Zerstörung bzw. Bruch des erfindungsgemäßen Formkörpers sich nicht ablöst oder abplatzt. Die gute Haftfestigkeit der Schicht ist daran zu erkennen, daß die Grenzflächenfestigkeit zwischen Siliciumnitrid und Beschichtung größer ist als die Festigkeit der Beschichtung allein.

Die Beschichtung des erfindungsgemäßen Formkörpers kann aus einer einzigen Schicht bestehen, sie kann jedoch auch aus einer mehrlagigen Schicht bestehen, wobei die einzelnen Schichten aus Glas- bzw. Glaskeramik mit oder ohne Farbpigmente oder deren Kombinationen bestehen.

Der erfindungsgemäße beschichtete Formkörper besitzt eine für den Gebrauch als Kochplatte erforderliche Temperaturbeständigkeit bis mindestens 350 °C. Seine Beschichtung verfärbt sich durch Temperatureinwirkung nicht. Aufgrund der geringen Dicke der Beschichtung besitzt der erfindungsgemäße Formkörper eine sehr gute thermische Leitfähigkeit und damit verbunden die Fähigkeit zur schnellen Wärmeübertragung. Aufgrund der glatten Oberfläche besitzt der erfindungsgemäße Formkörper eine sehr gute Reinigungsfähigkeit. Aufgrund der Härte und Kratzfestigkeit der Beschichtung und ihrer guten Haftung auf dem Siliciumnitrid ist der erfindungsgemäße Formkörper dauerhaft gebrauchsfähig. Ein eventuell erzeugter Abrieb (etwa als Folge der Reinigung), ist nicht gesundheitsschädlich. Insbesondere enthält die Beschichtung keine löslichen Schwermetalle wie Blei oder Cadmium.

Die Erfindung betrifft ferner ein Verfahren zur Herstellung eines erfindungsgemäßen Formkörpers. Dieses Verfahren ist dadurch gekennzeichnet, daß eine glas- oder glaskeramikbildende Schicht durch Spritzen, elektrostatische Beschichtung, Siebdruck, Schiebedruck, Stempeln, Tampondruck, Tauchen oder Schleudern auf einen Siliciumnitrid-Formkörper aufgebracht wird und der Formkörper aus Siliciumnitrid nach dem Aufbringen der glas- oder glaskeramikbildenden Schicht mit einer Aufheizrate von 150 bis 2000 °C/Stunde auf eine Temperatur von 700 bis 1500 °C erhitzt wird, bei dieser Temperatur zwischen 0,25 und 150 min gehalten wird und anschließend mit einer Abkühlrate von 500 bis 3500 °C/Stunde abgekühlt wird.

Der Formkörper aus Siliciumnitrid kann vor dem Auftrag der glas- oder glaskeramikbildenden Schicht thermisch so behandelt werden, daß eine dünne SiO₂-Schicht an der Oberfläche entsteht. Dies kann beispielsweise durch Tempern des Formkörpers an Luft bei Temperaturen über 1000 °C für 0,25 bis 6 Stunden erreicht werden.
Verfahren zum Aufbringen von Dekorschichten auf silikatkeramische Produkte sind in einschlägigen Lehrbüchern beschrieben, z.B. Stefan Stefanov und Svetlan Batschwarow: "Keramik-Glasuren", Bauverlag GmbH, Wiesbaden und Berlin, ISBN 3-7625-2600-1, 1988 oder Taylor, J.R., Bull, A.C., "Ceramic Glaze Technology", Pergamon Press, Oxford, 1986, ISBN 0-08-033465-2. Diese Verfahren eignen sich überraschenderweise auch zum Aufbringen einer Beschichtung umfassend ein Material ausgewählt aus der Gruppe Glas, Glaskeramik und deren Mischungen auf einen Siliciumnitridformkörper, obwohl dichtgesintertes Siliciumnitrid nicht zu den silikatkeramischen Produkten gehört.

Diese Eignung ist auch deshalb unerwartet, da Silikatkeramische Produkte definitionsgemäß SiO₂ als einen wesentlichen Bestandteil enthalten, während Siliciumnitrid, welches zur Gruppe der Nichtoxidkeramiken zählt, SiO₂ nur in geringen Mengen als dünne, oberflächliche Oxidschicht enthält.

Bei den Versuchen, die zur vorliegenden Erfindung führten, wurde überraschend gefunden, daß trotz der nur schwach ausgeprägten Oxidschicht von Siliciumnitrid-Oberflächen ein festhaftendes, glattes und kratzbeständiges Dekor auf der Siliciumnitridoberfläche aufgebracht werden kann.

Es wurde ferner beobachtet, daß sich die Beschichtungen auf Siliciumnitrid zum Teil anders verhalten als auf silikatkeramischen Produkten. Dieses andersartige Verhalten wird auf die verschiedene chemische Zusammensetzung von Siliciumnitrid und Silikatkeramik zurückgeführt. Es bedurfte daher einer Abänderung und spezifischen Anpassung der Brennbedingungen, wenn die Schicht auf Siliciumnitrid besonders festhaftend, glatt und kratzbeständig sein soll.

Ein solches bevorzugtes Verfahren stellt sich wie folgt dar: Die üblichen Rohstoffe für die Herstellung der Beschichtung umfassend ein Material ausgewählt aus der Gruppe Glas, Glaskeramik und deren Mischungen werden in üblicher Weise gemischt oder bereits verarbeitungsfertig bezogen.

Beispielsweise werden Fritten durch Abschrecken von Glasschmelzen oder Aufmahlen von Glaskörpern hergestellt.
Die bereits genannten Oxide oder Oxidgemische können direkt oder in Form ihrer Vorprodukte wie z. B. Karbonate, Nitrate oder Sulfate eingesetzt werden. Fritten und die farbgebenden Substanzen werden innig gemischt, um eine vollständige Homogenisierung zu erreichen. Es ist auch möglich, anstatt der Fritte ein Oxidgemisch zu verwenden, welches erst beim Brand zur Glasschmelze reagiert.

Die entsprechenden Rohpulver werden in üblicher Weise gemischt und in eine für die gewählte Auftragstechnik geeignete Konsistenz gebracht.

Durch Variation der Mischungsverhältnisse von Fritte bzw. Oxidgemisch und farbgebender Substanz kann das Erscheinungsbild der späteren Beschichtung (Dekorschicht) beeinflußt werden. Wenn eine transparente Dekorschicht erreicht werden soll, kann auch die Fritte bzw. das Oxidgemisch allein auf die Siliciumnitrid-Platte aufgetragen werden.

Die pulverförmigen, pastenförmigen oder verflüssigten Mischungen werden mittels eines der bereits genannten Verfahren (Spritzen, elektrostatische Beschichtung, Siebdruck, Schiebedruck, Stempeln, Tampondruck, Tauchen oder Schleudern) auf einen Siliciumnitrid-Formkörper aufgebracht und anschließend ggf. getrocknet.

Der so erhaltene Formkörper wird anschließend einem Brennprozeß unterzogen. Die maximale Temperatur sowie die Aufheizrate, die Haltezeit und die Abkühlrate des sog. Dekorbrandes hängt von der verwendeten Fritte und dem Pigment ab. In der Regel wird der Formköper mit einer Aufheizrate von 150 bis 2000 °C/Stunde besonders bevorzugt von 1000 bis 1500 °C/Stunde auf eine Temperatur von 700 bis 1500 °C vorzugsweise 800 bis 1200 °C erhitzt. Die Haltezeit bei dieser Temperatur liegt vorzugsweise zwischen 0,25 und 150 min, besonders bevorzugt zwischen 0,5 und 10 min. Anschließend wird der Formkörper vorzugsweise mit einer Abkühlrate von 500 bis 3500 °C/Stunde besonders bevorzugt von 900 bis 1800 °C/Stunde abgekühlt. Diese Brennparameter werden üblicherweise als "Schnellbrand" bezeichnet.

Übliche Muffelöfen mit natürlicher Kühlung erreichen die geforderten Abkühlgeschwindigkeiten nicht, weswegen die zur Ausführung des erfindungsgemäßen Verfahrens verwendeten Öfen vorzugsweise mit einer Schnellkühleinrichtung versehen sind. Auch Durchschuböfen sind zur Durchführung dieses erfindungsgemäßen Verfahrens geeignet, da in ihnen die Bedingungen des Schnellbrandes realisiert werden können.

Es zeigte sich, daß bei Haltezeiten unter 5 Minuten und Temperaturen unter 1100 °C eine oxidierende Atmosphäre gute Ergebnisse ergibt, während bei längeren Haltezeiten (über etwa 15 min) und Temperaturen über 1000 °C eine oxidationshemmende Schutzgasatmosphäre (z. B. Argon- oder Stickstoffatmosphäre) vorteilhaft ist.

Während des Dekorbrandes schmilzt die Fritte oder das Oxidgemisch auf und bildet eine Schmelze. Diese Schmelze umschließt die eingelagerten Pigmente und stellt die Bindung mit dem Siliciumnitrid-Formkörper her.

Bei der Abkühlung erstarrt die Schmelze weitgehend amorph und bildet eine glatte, harte und glasartige Beschichtung des Siliciumnitrid Substrates.

Die Beschichtung liegt nach dem Brand im wesentlichen in Form zweier Phasen vor:
a) eine glasig-amorphe Matrix und darin eingeschlossen
b) die farbgebenden Substanzen.

In einer bevorzugten Ausführungsform der Erfindung ist der Siliciumnitrid-Formkörper als Siliciumnitrid-Platte gestaltet und die Beschichtung nur auf einer Seite der Siliciumnitrid-Platte vorhanden.

Vorzugsweise ist bei dieser Ausführungsform auf der nicht beschichteten Seite der Siliciumnitrid-Platte unmittelbar ein elektrisch betriebener Heizleiter appliziert.

Eine solche Ausführungsform eignet sich vorzugsweise als Heizplatte.

Die Erfindung betrifft somit auch einen Heizkörper, bestehend aus einem erfindungsgemäßen Formkörper mit einem unmittelbar applizierten, elektrisch betriebenen Heizleiter.

Die Erfindung betrifft ferner die Verwendung eines erfindungsgemäßen Formkörpers als Kochplatte zum Erwärmen, Kochen, Simmern, Braten, Grillen und Frittieren von Lebensmitteln, sowie die Verwendung eines erfindungsgemäßen Formkörpers als Heizelement zum Erwärmen und kontrollierten Temperieren von Stoffen aller Art.

Die folgenden Beispiele dienen der weiteren Erläuterung der Erfindung.

### Beispiel 1

### Beschichtung eines Siliciumnitrid-Formkörpers mittels Direktsiebdruckverfahren.

Eine plangeschliffene Platte aus Siliciumnitrid mit einem Durchmesser von 188 mm und einer Dicke von 3,5 mm wird auf der zu beschichtenden Oberfläche mechanisch und chemisch gründlich gereinigt, um evtl. anhaftende Verschmutzungen zu beseitigen. Die Reinigung erfolgt in einem Ultraschallbad bei 90 °C Wassertemperatur unter Verwendung eines Reinigungsmittels. Zur Vorbereitung der Beschichtung wird der handelsübliche Farbkörper käuflich erhältlich unter der Bezeichnung CERDEC 771634 bei der Firma CERDECAG, Ceramic Colours, Gutleutstraße 215, 60039 Frankfurt / Main mit einem Siebdruckmedium, käuflich erhältlich unter der Bezeichnung CERDEC 80 396 bei der selben Firma im Verhältnis 2:1 gemischt. Dazu werden beide Komponenten auf einem Mischwalzenstuhl gemischt, bis die Mischung eine homogene, blasenfreie Konsistenz hat. Die Mischung wird nun auf ein Sieb (Stahl oder Nylon-Gewebe) gegeben, welches als Motivträger vorbereitet wurde. Mit einem Rakel wird die Mischung durch die Öffnungen des Siebes auf die Platte übertragen.

Die Mischung wird in einer Menge aufgetragen, daß sich eine Schichtstärke (im feuchten Zustand) von ca. 18 *µ* m ergibt. Die beschichtete Platte wird bei ca. 100 °C im Umlufttrockenschrank 120 min getrocknet.

Zum Einbrennen der Beschichtung wird die Platte in einem elektrisch beheizten Durchschubofen mit folgendem Parametern behandelt: Aufheizen auf 825 °C mit 1200 °C/h Aufheizgeschwindigkeit, 3 Minuten Haltezeit bei 825 °C, Abkühlung auf Raumtemperatur mit einer Abkühlrate von ca. 1500 °C/h.
Das Ergebnis ist eine glatte, weitgehend porenfreie, mechanisch feste Dekorschicht.

### Beispiel 2

### Vollflächige Beschichtung eines Formkörpers mittels pneumatischem Spritzen.

Eine plangeschliffene Platte aus Siliciumnitrid, wie in Beispiel 1, mit einem Durchmesser von 188 mm und einer Dicke von 3,5 mm wird auf der zu beschichtenden Oberfläche mechanisch und chemisch gründlich gereinigt, um evtl. anhaftende Verschmutzungen zu beseitigen. Zur Vorbereitung der Beschichtung werden 100 Teile der handelsüblichen Farbkörper CERDEC 771634 mit 50 Teilen Medium, beides käuflich erhältlich unter der Bezeichnung CERDEC 80 683 bei der Firma CERDECAG, Ceramic Colours, Gutleutstraße 215, 60039 Frankfurt / Main und 12 Teilen demineralisiertem Wasser zu einem homogenen Schlicker gemischt. In einer Spritzkabine wird die Platte, die in einem rotierenden Halter geführt ist, gleichmäßig mit dem Schlicker gespritzt. Eine Sprühdüse mit Durchmesser 0,05 mm ist dafür geeignet. Die Schichtstärke im feuchten Zustand ist ca. 15 *µ*m. Die Platte wird bei ca. 100 °C im Umlufttrockenschrank getrocknet.

Zum Einbrennen der Farbschicht wird die Platte in einem elektrisch beheizten Muffelofen mit Schnellkühleinrichtung mit folgendem Parametern behandelt: Aufheizen auf 1050 °C mit 1200 °C/h Aufheizgeschwindigkeit, 3 Minuten Haltezeit bei 1050 °C, Abkühlung auf Raumtemperatur mit ca. 1500 °C/h.

Das Ergebnis ist eine vollflächige, glatte, weitgehend porenfreie und mechanisch feste Dekorschicht. Die Schichtdicke wurde an einem keramografischen Schliff zu 8,5*µ*m bestimmt.

### Beispiel 3

### Aufbringen eines Motivdekors mittels Schiebedruck.

Beim Schiebedruck wird das Motiv nicht direkt auf die Platte gedruckt, sondern mittels einer Applikation (Schiebebild) übertragen. Zur Vorbereitung der Beschichtung und Herstellung des Schiebebildes wird der handelsübliche Farbkörper CERDEC 771634 mit einem öligen Siebdruckmedium im Verhältnis 2:1 gemischt. Außerdem wird für die Herstellung der Schiebebilder eine Filmlösung (CERDEC Filmlösung 80450) dazu gegeben. Die Komponenten werden auf einem Mischwalzenstuhl gemischt, bis die Farbe eine homogene, blasenfreie Konsistenz hat. Mit dem Siebdruckverfahren wird das Motiv auf ein Spezialpapier (Meta 2000 plus von Hoffmann & Engelmann AG, Talstraße 268, 67434 Neustadt) gedruckt. Das bedruckte Papier wird bei ca. 30 °C bis 40 °C getrocknet. Mit einem zweiten Sieb wird eine Lackschicht über die getrocknete Applikation gedruckt, wobei der Lackfilm ca. 3 mm überstehen muß. Der Lackfilm wurde getrocknet, womit die Herstellung des Schiebebildes beendet ist.

Eine plangeschliffene Platte aus Siliciumnitrid, wie im Beispiel 1, mit einem Durchmesser von 188 mm und einer Dicke von 3,5 mm wird auf der zu beschichtenden Oberfläche mechanisch und chemisch gründlich gereinigt, um evtl. anhaftende Verschmutzungen zu beseitigen. Zum Aufbringen der Beschichtung auf die Siliciumnitrid-Platte wird das zuvor hergestellte Schiebebild in warmem Wasser angelöst und vom Papier auf die Platte aufgeschoben. Mit einem Gummi-Rakel werden Luftblasen und Wasserüberschuß entfernt. Die so behandelte Platte wurde bei ca. 100 °C im Umlufttrockenschrank getrocknet.
Zum Einbrennen des Dekors wird die beschichtete Platte in einem elektrisch beheizten Durchschubofen mit folgendem Parametern behandelt: Aufheizen auf 870 °C mit 1200 °C/h Aufheizgeschwindigkeit, 3 Minuten Haltezeit bei 870 °C, Abkühlung auf Raumtemperatur mit ca. 1500 °C/h.

Das Ergebnis ist ein Siliciumnitrid-Platte mit einer glatten, weitgehend porenfreien und mechanisch festen Dekorschicht.
Die Schichtdicke wurde an einem keramografischen Schliff zu 6,4 Am bestimmt.

### Beispiel 4

### Aufbringen eines Motivdekors mittels Schiebedruck.

Ein wie in Beispiel 3 unter Verwendung der Farbe HERAEUS H 64671 hergestelltes, als Schiebebild dargestelltes Motivdekor wird, wie auch im Beispiel 3 beschrieben, auf eine Siliciumnitrid Platte aufgebracht.
Zum Einbrennen der Farbschicht wird die Platte in einem elektrisch beheizten Muffelofen mit folgenden Parametern behandelt: Aufheizen auf 815 °C mit 500 °C/h Aufheizgeschwindigkeit, 5 Minuten Haltezeit bei 815 °C, Abkühlung auf Raumtemperatur mit ca. 900 °C/h.

Das Ergebnis ist eine Siliciumnitrid-Platte mit einer sehr glatten, und haftfesten Dekorschicht.

### Beispiel 5

### Aufbringen eines Motivdekors mittels Schiebedruck.

Das als Schiebebild dargestellte Motivdekor (BASF P31 673) wird wie im Beispiel 3 aufgebracht.
Zum Einbrennen der Farbschicht wird die Platte in einem elektrisch beheizten Muffelofen mit folgendem Parametern behandelt: Aufheizen auf 815 °C mit 500 °C/h Aufheizgeschwindigkeit, 5 Minuten Haltezeit bei 815 °C, Abkühlung auf Raumtemperatur mit ca. 900 °C/h.

Das Ergebnis ist eine Siliciumnitrid-Platte mit einer sehr glatten, und haftfesten Dekorschicht.

Nach dem Brennen erhält man eine Siliciumnitrid-Platte mit einer Beschichtung, die sehr glatt, kratzfest und haftfest ist.

### Beispiel 6

### Beispiel 6 beschreibt die vollflächige Beschichtung eines rohrförmigen Formkörpers mittels pneumatischem Spritzen.

Ein rohrförmiger Siliciumnitrid-Formkörper mit den Maßen Aussendurchmesser = 90 mm, Innendurchmesser 70 mm, Höhe 100mm wird auf der zu beschichtenden Außenmantelfläche mechanisch und chemisch gründlich gereinigt, um evtl. anhaftende Verschmutzungen zu beseitigen. Zur Vorbereitung der Beschichtung werden 100 Teile der handelsüblichen Farbkörper CERDEC 771634 mit 50 Teilen Medium, beides käuflich erhältlich unter der Bezeichnung CERDEC 80 683 bei der Firma CERDEC AG, Ceramic Colours, Gutleutstraße 215, 60039 Frankfurt / Main und 12 Teilen demineralisiertem Wasser zu einem homogenen Schlicker gemischt. In einer Spritzkabine wird das Rohr, welches in einem rotierenden Halter geführt ist, gleichmäßig mit dem Schlicker gespritzt. Eine Sprühdüse mit Durchmesser 0,05 mm ist dafür geeignet. Die Schichtstärke im feuchten Zustand ist ca. 15*µ*m. Die Platte wird bei ca. 100 °C im Umlufttrockenschrank getrocknet.

Zum Einbrennen der Farbschicht wird das Rohr in einem elektrisch beheizten Muffelofen mit Schnellkühleinrichtung mit folgendem Parametern behandelt: Aufheizen auf 1050 °C mit 1200 °C/h Aufheizgeschwindigkeit, 3 Minuten Haltezeit bei 1050 °C, Abkühlung auf Raumtemperatur mit ca. 1500 °C/h.

Das Ergebnis ist eine glatte, weitgehend porenfreie und mechanisch feste Dekorschicht. Die Schichtdicke wurde an einem keramografischen Schliff zu 8,5 *µ*m bestimmt.

## Patentansprüche

1. Formkörper auf Basis von Siliciumnitrid, der **dadurch gekennzeichnet** ist, daß das Siliciumnitrid ausgewählt ist aus der Gruppe heißgepresstes Siliciumnitrid (HPSN), gasdruckgesintertes Siliciumnitrid (SSN), reaktionsgebundenes und nachgesintertes Siliciumnitrid (SRBSN) und heißisostatisch gepresstes Siliciumnitrid (HIPSN) und sich auf dem Siliciumnitrid eine haft- und kratzfeste oberflächliche Beschichtung umfassend ein Material ausgewählt aus der Gruppe Glas, Glaskeramik und deren Mischungen befindet.

2. Formkörper nach Anspruch 1, **dadurch gekennzeichnet**, daß das Beschichtungsmaterial in der Glasurtechnik übliche Oxide wie beispielsweise Oxide der Elemente Lithium, Natrium, Magnesium, Aluminium, Silicium, Bor, Kalium, Kalzium, Titan, Vanadium, Chrom, Mangan, Eisen Kobalt, Nickel, Kupfer, Zink, Strontium, Yttrium, Zirkon, Niob, Molybdän, Lanthan und Lanthaniden, Hafnium, Tantal, Wolfram und deren Mischungen umfaßt.

3. Formkörper nach einem der Ansprüche 1, oder 2, **dadurch gekennzeichnet**, daß das Beschichtungsmaterial farbgebende Substanzen enthält.

4. Formkörper nach Anspruch 3, **dadurch gekennzeichnet**, daß die farbgebenden Substanzen, ausgewählt aus der Gruppe der Farbpigmente aus Oxiden und Mischoxiden der Elemente Eisen, Kobalt, Kupfer, Mangan, Chrom, Nickel, Zinn, Zirkon, Vanadium, Antimon, Titan, Cadmium, Selen, Praseodym, Neodym, Wismut, Molybdän, Gold, Palladium, Silber, Platin, Iridium und der kolloidal verteilten Metallpartikel der Elemente Titan, Zirkon, Hafnium, Vanadium, Niob, Tantal, Chrom, Molybdän, Wolfram, Mangan, Rhenium, Eisen, Ruthenium, Osmium, Kobalt, Rhodium, Iridium, Nickel, Palladium, Platin, Kupfer, Silber, Gold, Zink, Kadmium und Blei.

5. Formkörper nach einem der Ansprüche 1 bis 4, **dadurch gekennzeichnet**, daß die Beschichtung aus den genannten Materialien besteht.

6. Formkörper nach einem der Ansprüche 1 bis 5, **dadurch gekennzeichnet**, daß die Beschichtung eine Dicke von weniger als 50 *µ*m besitzt.

7. Formkörper nach einem der Ansprüche 1 bis 6, **dadurch gekennzeichnet**, daß die Beschichtung eine Oberflächenrauhigkeit Rₐ < 5 *µ* m besitzt.

8. Verfahren zur Herstellung eines Formkörpers gemäß einem der Ansprüche 1 bis 7, **dadurch gekennzeichnet**, daß eine glas-oder glaskeramikbildende Schicht durch Spritzen, elektrostatische Beschichtung, Siebdruck, Stempeln, Tampondruck, Tauchen oder Schleudern auf einen Siliciumnitrid-Formkörper aufgebracht wird und der Formkörper aus Siliciumnitrid nach dem Aufbringen der glas- oder glaskeramikbildenden Schicht mit einer Aufheizrate von 150 bis 2000 °C/Stunde auf eine Temperatur von 700 bis 1500 °C erhitzt wird, bei dieser Temperatur zwischen 0,25 und 150 min gehalten wird und anschließend mit einer Abkühlrate von 500 bis 3500 °C/Stunde abgekühlt wird.

9. Verfahren nach Anspruch 8, **dadurch gekennzeichnet**, daß der Formkörper aus Siliciumnitrid vor dem Auftrag der glasoder glaskeramikbildenden Schicht thermisch so behandelt wird, daß eine dünne SiO₂-Schicht an der Oberfläche entsteht.

10. Heizkörper, bestehend aus einem Formkörper gemäß einem der Ansprüche 1 bis 7 und einem unmittelbar auf dem Formkörper applizierten, elektrisch betriebenen Heizleiter.

11. Verwendung eines Formkörpers nach Anspruch 1-7 als Kochplatte zum Erwärmen, Kochen, Simmern, Braten, Grillen und Frittieren von Lebensmitteln.

12. Verwendung eines Formkörpers nach Anspruch 1-7 als Heizelement zum Erwärmen und kontrollierten Temperieren von Stoffen aller Art.
